# EUROPÄISCHE PATENTSCHRIFT

(11) **EP 3 194 215 B1**
(45) Veröffentlichungstag und Bekanntmachung des Hinweises auf die Patenterteilung: **05.09.2018**
(21) Anmeldenummer: 15763316.5
(22) Anmeldetag: 11.09.2015
(51) Int. Cl.: B60R 13/02

(54) **BAUKASTENSYSTEM FÜR EIN FAHRZEUG**
MODULAR SYSTEM FOR A VEHICLE
SYSTÈME MODULAIRE POUR UN VÉHICULE

(30) Priorität: 17.09.2014 DE 102014218698
(43) Veröffentlichungstag der Anmeldung: 26.07.2017
(73) Patentinhaber: Volkswagen Aktiengesellschaft, 38440 Wolfsburg (DE)
(72) Erfinder: HINKFOTH, Jörg, 38442 Wolfsburg (DE)
(86) Internationale Anmeldenummer: PCT/EP2015/070901
(87) Internationale Veröffentlichungsnummer: WO 2016/041881

(56) Entgegenhaltungen:
- WO-A1-2014/110413
- DE-A1- 19 936 597
- DE-A1-102010 009 570

## Beschreibung

Die Erfindung betrifft ein Baukastensystem für ein Fahrzeug, insbesondere Kraftfahrzeug, wobei das Fahrzeug mit einem ausgewählten Armaturenbrett und mit mindestens einer ausgewählten Tür, die zum Verschließen oder Freigeben einer an das Armaturenbrett angrenzenden Türöffnung des Fahrzeugs verschwenkbar an dem Fahrzeug anordenbar ist, zu versehen ist.

Damit eine an ein Armaturenbrett angrenzende Tür eines Fahrzeugs sicher geschlossen werden kann, verbleibt in der geschlossenen Stellung der Tür eine Fuge zwischen der Tür und dem Armaturenbrett. Aus der Offenlegungsschrift DE 198 13 037 A1 ist es bekannt, dass zum Aufwerten des optischen Eindrucks die Tür einen Endbereich des Armaturenbretts spaltfrei übergreift, so dass die Fuge im Wesentlichen verdeckt wird. Weiterhin ist aus der Offenlegungsschrift DE 10 2009 012 645 A1 ein Bausatz zur Herstellung eines in eine Kraftfahrzeugtür einzubauenden Türmoduls bekannt, das einen modularen, an unterschiedliche Bedürfnisse anpassbaren Aufbau einer Kraftfahrzeugtür erleichtern soll. Wenn das Innenraumdesign neu gestaltet oder variiert werden soll, müssen bisher Tür und Armaturenbrett neu aufeinander abgestimmt werden, damit die notwendige Fuge erhalten bleibt. Aus der Offenlegungsschrift DE 10 2010 009 570 A1 ist beispielsweise ein Baukastensystem der gattungsgemäßen Art bereits bekannt.

Der Erfindung liegt die Aufgabe zugrunde, ein Baukastensystem zu schaffen, dass eine hohe Anzahl von Variationen bei der Gestaltung insbesondere des Fahrzeuginnenraums auf einfache und kostengünstige Art und Weise ermöglicht.

Die der Erfindung zugrundeliegende Aufgabe wird durch ein Baukastensystem mit den Merkmalen des Anspruchs 1 gelöst. Dieses hat den Vorteil, dass Armaturenbrett und Tür stets eine Fuge bilden, die den Ansprüchen an ein vorgebbares Spaltmaß genügt, unabhängig davon, welche Tür oder welches Armaturenbrett des Baukastensystems verbaut wird. Dadurch wird eine Austauschbarkeit von Armaturenbrett und/oder Türen innerhalb des Baukastensystems gewährleistet, was unterschiedliche Gestaltungsmöglichkeiten bietet, ohne dass konstruktiv Änderungen vorgenommen werden müssen. Das erfindungsgemäße Baukastensystem zeichnet sich dadurch aus, dass es zur Auswahl mindestens zwei unterschiedliche Armaturenbretter und/oder mindestens zwei unterschiedliche Türen aufweist, wobei das jeweilige Armaturenbrett jeweils einen ersten Fugenbereich und die jeweilige Tür jeweils einen mit dem ersten Fugenbereich korrespondierenden zweiten Fugenbereich aufweist, so dass der jeweilige erste Fugenbereich und der jeweilige zweite Fugenbereich in der geschlossenen Stellung der Tür stets die gleiche Fuge bilden. Die Türen und/oder die Armaturenbretter sind also derart ausgebildet, dass unabhängig davon, welche Kombination von Tür und Armaturenbrett innerhalb des Baukastensystems gewählt wird, stets die gleiche Fuge zwischen Tür und Armaturenbrett ausgebildet wird und somit die freie Kombinierbarkeit von Tür und Armaturenbrett gewährleistet ist. Unter "gleiche Fuge" im Sinne der vorliegenden Anmeldung wird verstanden, dass die erfindungsgemäß gebildeten Fugen die gleiche Fugenbreite, das heißt einen gleich breiten Fugenspalt besitzen. Vorzugsweise weisen die erfindungsgemäß gebildeten Fugen auch jeweils die gleiche Ausrichtung, das heißt die gleiche Winkelebene im räumlichen Koordinatensystem des Fahrzeugs auf.

Zweckmäßigerweise ist der zweite Fugenbereich der unterschiedlichen Türen und der erste Fugenbereich der unterschiedlichen Armaturenbretter dazu jeweils stets identisch ausgebildet. Abgesehen von dem ersten oder zweiten Fugenbereich sind die Armaturenbretter und/oder Türen zweckmäßigerweise unterschiedlich ausgebildet, beispielsweise um unterschiedliche Funktionen zu erfüllen. Schon bei einer geringen Anzahl von mehreren unterschiedlichen Türen und/oder Armaturenbrettern lassen sich hierdurch viele verschiedene Variationsmöglichkeiten kostengünstig realisieren. Vorzugsweise weist das Baukastensystem jeweils mehrere Türen eines ersten Typs und mehrere Türen zumindest eines zweiten Typs auf, die jeweils den gleichen zweiten Fugenbereich aufweisen. Entsprechend weist das Baukastensystem alternativ oder zusätzlich vorzugsweise mehrere Armaturenbretter eines ersten Typs und mehrere Armaturenbretter zumindest eines zweiten Typs auf, die jeweils einen gleichen ersten Fugenbereich aufweisen. Besonders bevorzugt weist das Baukastensystem mehr als nur zwei Typen von Armaturenbrettern und/oder Türen auf, um die Vielfältigkeit beziehungsweise Variabilität des Baukastensystems weiter zu erhöhen.

Gemäß einer vorteilhaften Weiterbildung der Erfindung ist vorgesehen, dass die unterschiedlichen Türen in ihrem zweiten Fugenbereich eine Vertiefung zur bereichsweisen Aufnahme des jeweiligen Armaturenbretts mit dessen ersten Fugenbereich aufweisen. Dadurch, dass das Armaturenbett an seinem ersten Fugenbereich bereichsweise durch die Tür aufgenommen wird, entsteht eine Überlappung zwischen Tür und Armaturenbrett, welche die Fuge zwischen Tür und Armaturenbrett zumindest abschnittsweise überdeckt, wodurch der optische Eindruck verbessert wird. Da die Türen des Baukastensystems einerseits und die Armaturenbretter des Baukastensystems andererseits jeweils den gleichen ersten beziehungsweise den gleichen zweiten Fugenbereich aufweisen, ist auch bei dieser Ausbildung die variable Kombinierbarkeit innerhalb des Baukastensystems gewährleistet.

Erfindungsgemäß ist vorgesehen, dass die unterschiedlichen Türen insbesondere an ihrer Innenseite unterschiedlich breite Armauflagen aufweisen. Dadurch ist es beispielsweise möglich, bei einem Fahrzeug, das in der ersten Sitzreihe zwei Sitze aufweist, breitere Armauflagen vorzusehen, und in einem Fahrzeug, das in der ersten Sitzreihe drei Sitze aufweist, schmalere Armauflagen, um den Innenraum stets optimal auszunutzen. Durch das vorteilhafte Baukastensystem lässt sich somit die Innenverkleidung auf einfache Art und Weise an die Innenraumgestaltung, insbesondere die Anzahl der Sitze einer ersten Sitzreihe des Fahrzeugs, die dem Armaturenbrett gegenüberliegend angeordnet ist, anpassen.

Erfindungsgemäß ist zusätzlich oder alternativ vorgesehen, dass die unterschiedlichen Armaturenbretter unterschiedlich breit ausgebildet sind. Dadurch können die Armaturenbretter beispielsweise bei verschiedenen Fahrzeugtypen zum Einsatz kommen. Sind außerdem mehrere unterschiedliche Türen der erfindungsgemäßen Art vorgesehen, so können diese unterschiedlich mit dem gewählten Armaturenbrett kombiniert werden. So können die Türen sowohl bei einem Fahrzeug mit einem breiten Armaturenbrett sowie bei einem Fahrzeug mit einem schmaleren Armaturenbrett vorgesehen werden. Unter der Breite des Armaturenbretts wird hierbei die Erstreckung des Armaturenbretts von der Fahrerseite zu der Beifahrerseite des Fahrzeugs beziehungsweise Kraftfahrzeugs, also insbesondere die Erstreckung des Armaturenbretts von einer Tür zu einer gegenüberliegenden anderen Tür verstanden. Zweckmäßigerweise weist das Baukastensystem mehrere unterschiedliche Türen für die Fahrerseite sowie mehrere unterschiedliche Türen für die Beifahrerseite auf, wobei die Türen für die Fahrerseite vorzugsweise spiegelbildlich zu den Türen für die Beifahrerseite ausgebildet sind.

Besonders bevorzugt ist vorgesehen, dass die Türen jeweils einen Türrahmen und ein an dem Türrahmen angeordnetes Einsatzteil aufweisen, wobei das Einsatzteil den ersten Fugenbereich bildet. Die Türen sind also jeweils mehrteilig ausgebildet, wobei der Teil, der den ersten Fugenbereich ausbildet, durch ein an einem Türrahmen angeordnetes Einsatzteil gebildet ist. Dadurch ist es möglich, dass die Türrahmen der unterschiedlichen Türen stets gleich ausgebildet sind, und die Gestaltung der Tür sich nur durch das Vorsehen unterschiedlicher Einsatzteile ergibt. Dadurch können weitere Herstellungskosten gespart werden. Insbesondere sind unterschiedliche Einsatzteile vorgesehen, die beispielsweise unterschiedlich breite Armauflagen, unterschiedliche Anordnung von Bedienelementen und/oder unterschiedliche Anordnungen beziehungsweise Vorkehrungen zur Anbringung von Lautsprechern aufweisen. Insbesondere zeichnen sich die unterschiedlichen Armaturenbretter und/oder die unterschiedlichen Türen auch dadurch aus, dass sie mit einer unterschiedlichen Dekoration versehen sind. Weiterhin ist bevorzugt vorgesehen, dass die unterschiedlichen Türen unterschiedliche Türrahmen aufweisen, die insbesondere unterschiedlich breit ausgebildet sind. Somit stehen vorzugsweise insgesamt mindestens zwei unterschiedliche Türrahmen, mindestens zwei unterschiedliche Einsatzteile sowie mindestens zwei unterschiedliche Armaturenbretter in dem Baukastensystem für den Einsatz in einem Kraftfahrzeug zur Verfügung, die miteinander kombiniert werden können.

Weiterhin ist bevorzugt vorgesehen, dass die Türrahmen und die Einsatzteile derart ausgebildet sind, dass in/an jedem Türrahmen jedes der Einsatzteile anordenbar ist. Dadurch lassen sich auch die Einsatzteile mit den Türrahmen frei kombinieren, wodurch die Variabilität des Baukastensystems noch weiter erhöht wird. Insbesondere weisen die Türrahmen Einsatzteilaufnahmen mit identischen Innenkonturen auf, während die Einsatzteile mit identischen und mit den Innenkonturen korrespondierenden Außenkonturen versehen sind, so dass die Einsatzteile sich stets in die Einsatzteilaufnahme des jeweiligen Türrahmens einsetzen lassen.

Im Folgenden soll die Erfindung anhand der Zeichnung näher erläutert werden. Dazu zeigen
- Figur 1: ein Fahrzeug in einer vereinfachten Innenansicht,
- Figuren 2A bis C: ein Baukastensystem für das Fahrzeug in einer vereinfachten Darstellung,
- Figuren 3A bis H: unterschiedliche Kombinationsmöglichkeiten des Baukastensystems, jeweils in einer vereinfachten Darstellung.

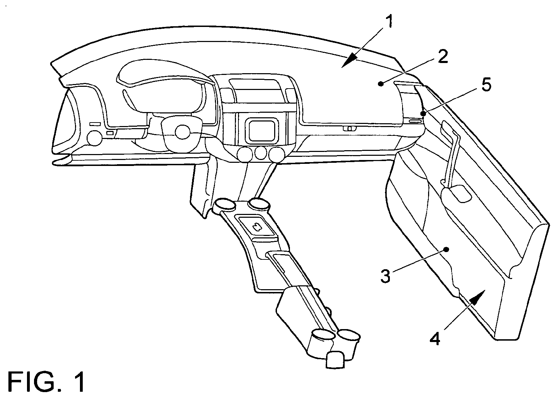

Figur 1 zeigt den Innenraum 1 eines Kraftfahrzeugs in einer perspektivischen Darstellung. Der Innenraum 1 wird im Bereich der vorderen Sitzreihe des Kraftfahrzeugs durch ein Armaturenbrett 2 und die Innenverkleidung 3 einer Tür 4 geprägt. Dargestellt ist der Blick auf Armaturenbrett 2 und Tür 4, die insoweit eine Beifahrertür des Kraftfahrzeugs darstellt. Die Fahrertür ist aus Übersichtlichkeitsgründen nicht gezeigt.

Das Armaturenbrett 2 ist mehrteilig ausgebildet und erstreckt sich von der Fahrerseite bis zur Beifahrerseite über die gesamte Breite des Innenraums 1 des Kraftfahrzeugs. Wie üblich trägt das Armaturenbrett 2 Anzeigeinstrumente und Bedienelemente des Kraftfahrzeugs sowie gegebenenfalls einen Beifahrerairbag und Luftausströmer. Die Innenverkleidung 3 der Tür 4 liegt seitlich an dem beifahrerseitigen Ende des Armaturenbretts 2 an, wodurch eine Fuge 5 zwischen Tür 4 und Armaturenbrett 2 gebildet wird, die auch als die Königsfuge bezeichnet wird.

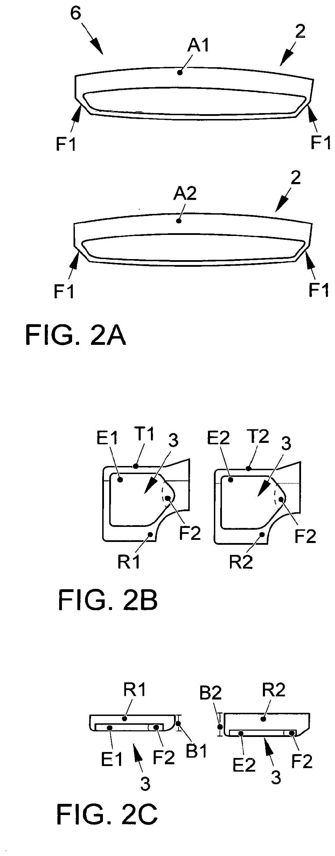

Figur 2 zeigt ein Baukastensystem für den Innenraum 1 des Kraftfahrzeugs. Das Baukastensystem 6 weist gemäß Figur 2A zwei Armaturenbretter A1, A2 auf, die unterschiedlich ausgebildet sind. Insbesondere ist vorgesehen, dass die Armaturenbretter A1, A2 ein unterschiedliches Design aufweisen, wobei das Armaturenbrett A1 beispielsweise für den Personen-Kraftfahrzeugbereich ausgebildet ist, während das Armaturenbrett A2 für den Nutzkraftfahrzeugbereich gestaltet wurde. Die Armaturenbretter A1, A2 können sich dazu beispielsweise dadurch unterscheiden, dass das Armaturenbrett A2 mehr Ablagemöglichkeiten zur Verfügung stellt, während das Armaturenbrett A1 hochwertiger und mit einem anspruchsvolleren Design gestaltet ist.

Die Armaturenbretter A1, A2 weisen jeweils an ihren beifahrertür- beziehungsweise fahrertürseitigen Enden einen ersten Fugenbereich F1 auf, der im verbauten Zustand, wie in Figur 1 gezeigt, die Fuge 5 zwischen Armaturenbrett A2 und der Beifahrertür 4 beziehungsweise der nicht dargestellten Fahrertür mitbildet.

Das Baukastensystem 6 weist weiterhin zwei unterschiedliche Türen T1 und T2 auf, die in Figur 2B in einer Seitenansicht und in Figur 2C in einer Draufsicht dargestellt sind. Die Türen T1 und T2 weisen in der Seitenansicht die gleichen Abmessungen auf. In der Draufsicht gemäß Figur 2C ist zu erkennen, dass die Tür T2 eine Breite B2 aufweist, die größer ausgebildet ist als die Breite B1 der Tür T1. Die Türen T1 und T2 weisen jeweils einen Türrahmen R1 und R2 auf, der an dem Kraftfahrzeug 2, beziehungsweise an einer Karosserie des Kraftfahrzeugs 2, schwenkbar lagerbar ist. Weiterhin weist die jeweilige Tür T1, T2 ein Einsatzteil E1 beziehungsweise E2 auf, das zumindest im Wesentlichen die Innenverkleidung 3 bildet. Die Einsatzteile E1 und E2 weisen jeweils einen zweiten Fugenbereich F2 auf. Die Fugenbereiche F2 der Türen T1, T2 beziehungsweise der Einsatzteile E1, E2 sind identisch zueinander ausgebildet. Im Übrigen sind die Türen T1, T2 unterschiedlich ausgebildet. So kann insbesondere vorgesehen sein, dass die Armlehne 8 in der Tür T1 schmaler ausgebildet ist als die Armlehne 8 in der Tür T2. Dadurch eignet sich die Tür T1 beispielsweise besser für Kraftfahrzeuge, die drei Sitze in der ersten Sitzreihe aufweisen und insofern mehr Platz in der Breite benötigen. Die Tür T2 ist dann von Vorteil, wenn die erste Sitzreihe nur zwei Sitze aufweist, so dass insgesamt mehr Platz zur Verfügung steht und insbesondere der Sitzkomfort für die Insassen durch eine breitere Armauflage optimiert werden soll.

Die Fugenbereiche F1 und F2 sind korrespondierend zueinander ausgebildet. Da der Fugenbereich F2 der jeweiligen Tür T1, T2 identisch ausgebildet ist, lassen sich die Türen T1 und T2 beliebig mit den Armaturenbrettern A1, A2 kombinieren, deren Fugenbereiche F1 identisch zueinander ausgebildet sind. Ohne großen Aufwand lassen sich damit unterschiedliche Variationen für die Innenraumgestaltung des Kraftfahrzeugs mittels des Baukastensystems 6 realisieren.

Die Einsatzteile E1 und E2 unterscheiden sich weiterhin bevorzugt dadurch, dass sie eine unterschiedliche optische und gegebenenfalls wertige Gestaltung aufweisen, wobei beispielsweise das Einsatzteil E1 für den Personenkraftfahrzeugbereich und das andere Einsatzteil E2 eher für den Nutzfahrzeugbereich ausgebildet ist, entsprechend der Armaturenbretter A1 und A2. Dabei kann beispielsweise vorgesehen sein, dass das Einsatzteil E1 einen Betätigungsschalter für einen elektrischen Fensterantrieb trägt, während das Einsatzteil E2 eine Kurbel zum manuellen Betätigen des Fensters trägt.

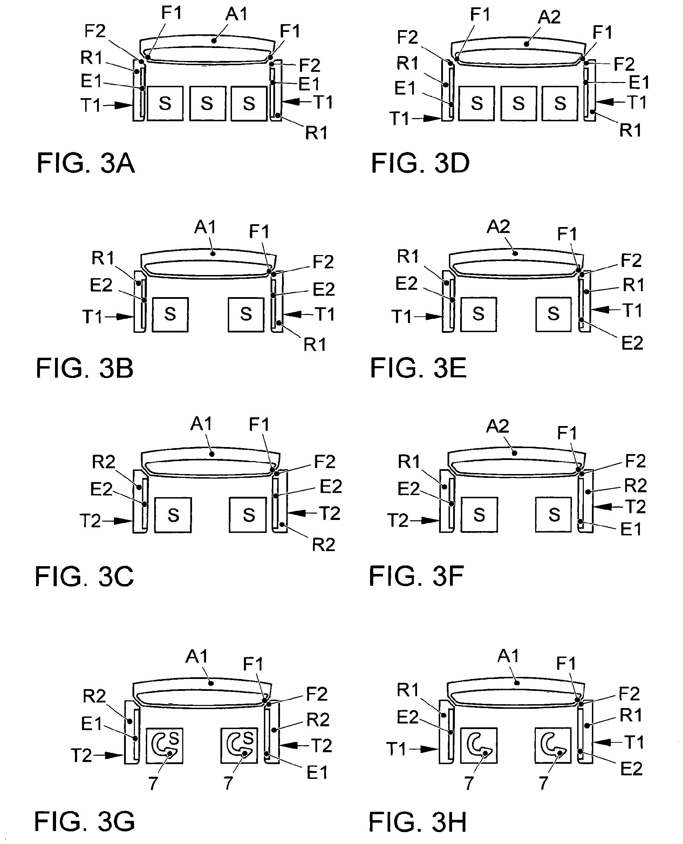

Figuren 3A bis H zeigen unterschiedliche Kombinationen von Armaturenbrett 2 und Tür 4 aus dem Baukastensystem 6. Figur 3A zeigt eine erste Kombination, in welcher das Armaturenbrett A1 mit der Tür T1 kombiniert ist. Dabei ist vorgesehen, dass die Tür T1 auch auf der Fahrerseite des Kraftfahrzeugs vorgesehen ist. Zweckmäßigerweise ist die Tür T1 auf der Fahrerseite des Kraftfahrzeugs spiegelbildlich zu der Tür T1 auf der Beifahrerseite ausgebildet. Zweckmäßigerweise weist das Baukastensystem 6 sowohl für Fahrertür als auch für Beifahrertür entsprechende Versionen der Türen T1 und T2 beziehungsweise der Türrahmen R1 und R2 sowie der Einsatzteile E1 und E2 auf. Im ersten Ausführungsbeispiel von Figur 3A weist das Fahrzeug drei Sitze S in der ersten Sitzreihe zwischen den Türen T1 auf Fahrerseite und Beifahrerseite auf. Die Türen T1 mit den Einsatzteilen E1 sind schmal ausgebildet und weisen schmale Armauflagen auf, so dass der maximal mögliche Raum für drei Fahrzeuginsassen zur Verfügung gestellt wird.

Figur 3B zeigt ein zweites Ausführungsbeispiel, bei welchem nur zwei Sitze in der ersten Sitzreihe vorgesehen sind. Zur Erhöhung des Fahrkomforts sind in diesem Fall die Türen T1 durch die Türrahmen R1 und Einsatzteile E2 ausgebildet, so dass einerseits ein schmaler Türrahmen gegeben ist, und andererseits eine breite Armauflage durch das Einsatzteil E2 bereitgestellt wird. Die Türrahmen R1 und R2 weisen dazu zweckmäßigerweise die gleiche Einsatzteilaufnahme auf, so dass die Einsatzteile E1, E2 mit den Türrahmen R1 und R2 beliebig kombinierbar sind.

Figur 3C zeigt ein weiteres Ausführungsbeispiel, in welchem das Armaturenbrett A1 mit den Türen T2 kombiniert ist, wobei die Türen T2 gemäß Figuren 2B und C durch den Türrahmen R2 und das Einsatzteil E2 gebildet sind.

Figur 3D zeigt in einem weiteren Ausführungsbeispiel eine Variante, bei welcher das Armaturenbrett A2 mit den schmalen Türrahmen R1 oder Türen T1 kombiniert wurde, wobei die Türen T1 die Einsatzteile E2 aufweisen, und wobei in der ersten Sitzreihe drei Sitze S nebeneinander vorgesehen sind.

Figur 3E zeigt ein weiteres Ausführungsbeispiel, das dem vorhergehenden Ausführungsbeispiel im Wesentlichen entspricht, wobei nur zwei Sitze S in der ersten Sitzreihe vorgesehen sind, und in den Türrahmen R1 jeweils Einsatzteile E2 angeordnet sind.

Figur 3F zeigt ein Ausführungsbeispiel, bei welchem das Armaturenbrett A2 mit der Tür T2 kombiniert wurde, wobei die Einsatzteile E2 durch die Einsatzteile E1 ausgetauscht wurden.

Figur 3G zeigt ein weiteres Ausführungsbeispiel, bei welchem das Armaturenbrett A1 mit den Türen T2 kombiniert wurde, und wobei an den Türen T2, wie in dem Ausführungsbeispiel von Figur 3F, die Einsatzteile E1 vorgesehen sind. Dabei sind die zwei Sitze S der ersten Sitzreihe drehbar in dem Kraftfahrzeug angeordnet, wie durch einen Pfeil 7 angedeutet.

Figur 3H zeigt ein weiteres Ausführungsbeispiel, das im Unterschied zu dem Ausführungsbeispiel von Figur 3G mit dem Armaturenbrett 1 die Türen T1 kombiniert, wobei anstelle der Einsatzteile E1 die Einsatzteile E2 vorgesehen sind.

Anhand der Ausführungsbeispiele wird deutlich, dass eine vielfältige Kombination von Armaturenbrettern A1, A2 und Türen T1, T2 beziehungsweise Türrahmen R1, R2 und Einsatzteilen E1, E2 möglich ist. Da die ersten Fugenbereiche F1 und die zweiten Fugenbereiche F2 jeweils identisch ausgebildet sind, so dass stets der erste Fugenbereich F1 des gewählten Armaturenbretts mit dem zweiten Fugenbereich F2 der gewählten Tür T1, T2 korrespondiert, um die Fuge 5 stets gleich auszubilden, ist es möglich aus dem Baukastensystem 6 die Bestandteile für die Innenraumgestaltung des Fahrzeugs entsprechend frei miteinander zu kombinieren, so dass beispielsweise für zweisitzige Fahrzeuge breite Türinnenverkleidungen mit Dekorleisten vorgesehen werden können, während für dreisitzige Fahrzeuge schmale Türen ohne Dekorleisten vorgesehen werden können. Die Fuge 5 weist dabei jeweils die gleiche Fugenspaltbreite sowie die gleiche Winkelebenenorientierung im räumlichen Koordinatensystem des Fahrzeugs auf.

## Patentansprüche

1. Baukastensystem (6) für ein Fahrzeug, insbesondere Kraftfahrzeug, wobei das Fahrzeug mit einem ausgewählten Armaturenbrett (A1,A2) und mit mindestens einer ausgewählten Tür (T1,T2), die zum Verschließen oder Freigeben einer an das Armaturenbrett angrenzenden Türöffnung verschwenkbar an dem Fahrzeug anordenbar ist, zu versehen ist, wobei das Baukastensystem (6) zur Auswahl mindestens zwei unterschiedliche Armaturenbretter (A1,A2) und/oder mindestens zwei unterschiedliche Türen (T1,T2) aufweist, wobei die Armaturenbretter (A1,A2) jeweils einen ersten Fugenbereich (F1) und die Türen jeweils einen mit dem ersten Fugenbereich (F1) korrespondierenden zweiten Fugenbereich (F2) aufweisen, so dass der jeweils erste Fugenbereich (F1) und der jeweils zweite Fugenbereich (F2) in der geschlossenen Stellung der Tür (T1,T2) stets eine Fuge (5) mit der gleichen Breite bilden, **dadurch gekennzeichnet, dass** die Türen (T1,T2) mit unterschiedlich breiten Armauflagen (8) und/oder dass die Armaturenbretter (A1,A2) unterschiedlich breit ausgebildet sind.

2. Baukastensystem nach Anspruch 1, **dadurch gekennzeichnet, dass** die Türen (T1,T2) in ihrem zweiten Fugenbereich (F2) eine Vertiefung zur bereichsweisen Aufnahme des jeweiligen Armaturenbretts (A1,A2), insbesondere mit dessen ersten Fugenbereich (F1), aufweisen.

3. Baukastensystem nach einem der vorhergehenden Ansprüche, **dadurch gekennzeichnet, dass** die Türen (T1,T2) jeweils einen Türrahmen (R1,R2) und ein an dem Türrahmen (R1,R2) angeordnetes Einsatzteil (E1,E2) aufweisen, wobei das Einsatzteil (E1,E2) den zweiten Fugenbereich (F2) bildet.

4. Baukastensystem nach einem der vorhergehenden Ansprüche, **dadurch gekennzeichnet, dass** unterschiedliche Einsatzteile (E1,E2) zum Bilden der unterschiedlichen Türen (T1,T2) vorgesehen sind.

5. Baukastensystem nach einem der vorhergehenden Ansprüche, **dadurch gekennzeichnet, dass** die Türrahmen (T1,T2) und die Einsatzteile (E1,E2) derart ausgebildet sind, dass in/an jedem Türrahmen (R1,R2) jedes der Einsatzteile (E1,E2) anordenbar ist.

6. Baukastensystem nach einem der vorhergehenden Ansprüche, **dadurch gekennzeichnet, dass** die gebildete Fuge (5) jeweils die gleiche Ausrichtung, das heißt die gleiche Winkelebene im räumlichen Koordinatensystem des Fahrzeugs aufweist.

## Claims

1. Modular system (6) for a vehicle, in particular motor vehicle, wherein the vehicle is to be provided with a selected dashboard (A1, A2) and with at least one selected door (T1, T2) which can be arranged pivotably on the vehicle in order to close or open up a door opening adjacent to the dashboard, wherein the modular system (6) has at least two different dashboards (A1, A2) and/or at least two different doors (T1, T2) for selection, wherein the dashboards (A1, A2) each have a first joint region (F1) and the doors each have a second joint region (F2) corresponding to the first joint region (F1), and therefore the first joint region (F1) in each case and the second joint region (F2) in each case always form a joint (5) with the same width in the closed position of the door (T1, T2), **characterized in that** the doors (T1, T2) are formed with arm rests (8) of differing width, and/or **in that** the dashboards (A1, A2) are formed with differing widths.

2. Modular system according to Claim 1, **characterized in that** the doors (T1, T2) have a depression **in that** second joint region (F2) for receiving regions of the respective dashboard (A1, A2), in particular with its first joint region (F1).

3. Modular system according to either of the preceding claims, **characterized in that** the doors (T1, T2) each have a door frame (R1, R2) and an insert part (E1, E2) which is arranged on the door frame (R1, R2), wherein the insert part (E1, E2) forms the second joint region (F2).

4. Modular system according to one of the preceding claims, **characterized in that** different insert parts (E1, E2) are provided for forming the different doors (T1, T2) .

5. Modular system according to one of the preceding claims, **characterized in that** the door frames (T1, T2) and the insert parts (E1, E2) are designed in such a manner that each of the insert parts (E1, E2) can be arranged in/on each door frame (R1, R2).

6. Modular system according to one of the preceding claims, **characterized in that** the joint (5) which is formed in each case has the same orientation, that is to say the same angular plane in the spatial system of coordinates of the vehicle.

## Revendications

1. Système modulaire (6) pour véhicule, en particulier pour véhicule automobile, le véhicule devant être doté d'un tableau de bord (A1, A2) sélectionné et d'au moins une porte sélectionnée (T1, T2) disposée à pivotement sur le véhicule pour fermer ou libérer une ouverture de porte adjacente au tableau de bord, le système modulaire (6) présentant pour la sélection au moins deux tableaux de bord (A1, A2) différents et/ou d'au moins deux portes (T1, T2) différentes, les tableaux de bord (A1, A2) présentant chacun une première zone de jonction (F1) et les portes présentant chacune une deuxième zone de jonction (F2) qui correspond à la première zone de jonction (F1) de telle sorte que la première zone de jonction (F1) et la deuxième zone de jonction (F2) forment toujours une jonction (5) de même largeur lorsque la porte (T1, T2) est fermée,
**caractérisé en ce que**
les portes (T1, T2) présentent des supports (8) de bras de différentes largeurs et/ou
**en ce que** les tableaux de bord (A1, A2) présentent des largeurs différentes.

2. Système modulaire selon la revendication 1, **caractérisé en ce que** les portes (T1, T2) présentent dans leur deuxième zone de jonction (F2) un creux permettant de reprendre en partie le tableau de bord (A1, A2), en particulier par sa première zone de jonction (F1).

3. Système modulaire selon l'une des revendications précédentes, **caractérisé en ce que** les portes (T1, T2) présentent chacune un encadrement de porte (R1, R2) et une pièce de garniture (E1, E2) disposée sur l'encadrement de porte (R1, R2), la pièce de garniture (E1, E2) formant la deuxième zone de jonction (F2).

4. Système modulaire selon l'une des revendications précédentes, **caractérisé en ce que** différentes pièces de garniture (E1, E2) sont prévues pour former les différentes portes (T1, T2).

5. Système modulaire selon l'une des revendications précédentes, **caractérisé en ce que** les encadrements de porte (R1, R2) et les pièces de garniture (E1, E2) sont formés de telle sorte que chacune des pièces de garniture (E1, E2) puisse être disposée sur chaque encadrement de porte (R1, R2).

6. Système modulaire selon l'une des revendications précédentes, **caractérisé en ce que** le joint (5) formé présente la même orientation, c'est-à-dire le même plan oblique dans le système de coordonnées spatiales du véhicule.
